(19) Europäisches Patentamt
European Patent Office
Office européen des brevets

(11) **EP 4 203 232 A1**

(12) **DEMANDE DE BREVET EUROPEEN**

(43) Date de publication:
**28.06.2023 Bulletin 2023/26**

(21) Numéro de dépôt: **22215258.9**

(22) Date de dépôt: **21.12.2022**

(51) Classification Internationale des Brevets (IPC):
***H02J 7/00*** *(2006.01)*  ***H02J 7/36*** *(2006.01)*

(52) Classification Coopérative des Brevets (CPC):
**H02J 7/0024; H02J 7/0016; H02J 7/36**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**KH MA MD TN**

(30) Priorité: **23.12.2021 FR 2114454**

(71) Demandeur: **COMMISSARIAT A L'ENERGIE ATOMIQUE ET AUX ENERGIES ALTERNATIVES**
**75015 Paris (FR)**

(72) Inventeurs:
• **CASSARINO, Leandro**
**38054 GRENOBLE CEDEX 09 (FR)**

• **BACQUET, Sylvain**
**38054 GRENOBLE CEDEX 09 (FR)**
• **DESPESSE, Ghislain**
**38054 GRENOBLE CEDEX 09 (FR)**
• **FERNANDEZ, Eric**
**38054 GRENOBLE CEDEX 09 (FR)**
• **LOPEZ, Yan**
**38054 GRENOBLE CEDEX 09 (FR)**
• **THOMAS, Remy**
**38054 GRENOBLE CEDEX 09 (FR)**

(74) Mandataire: **Brevalex**
**Tour Trinity**
**1 Bis Esplanade de La Défense**
**CS 60347**
**92035 Paris La Défense Cedex (FR)**

(54) **PROCÉDÉ D'ÉQUILIBRAGE PAR COURT-CIRCUITAGE DE LA SORTIE POUR UN DISPOSITIF A BATTERIES COMMUTEES**

(57)      L'invention concerne un dispositif de type pack de batterie comportant :

a) - une pluralité d'éléments de stockage d'énergie en série, chacune associée avec des moyens de commutation pour la connecter en série ou la déconnecter et/ou pour la court-circuiter ;

b) - des moyens (20) pour établir un court-circuit entre une première borne (101) et une deuxième borne (102) de la batterie lorsque celle-ci est déconnectée ou fournit une tension nulle ;

c) des moyens (30) de contrôle, spécifiquement adaptés pour :

- sélectionner au moins un premier élément de stockage d'énergie dans un premier état de charge et au moins une deuxième élément de stockage d'énergie dans un deuxième état de charge et pour faire circuler un courant du premier élément vers le deuxième élément lorsque la première borne (101) et la deuxième borne (102) du dispositif sont court-circuitées ;

- arrêter le courant lorsque au moins un des paramètres du premier élément choisi parmi la charge, la tension, l'état de santé, la température, l'impédance a une valeur égale à celle du même paramètre pour le deuxième élément ou à une valeur moyenne de ce même paramètre pour au moins une partie des éléments.

Fig. 1

**Description**

**DOMAINE TECHNIQUE ET ÉTAT DE LA TECHNIQUE ANTÉRIEURE**

L'invention concerne le domaine des dispositifs à batteries commutées. Elle concerne plus particulièrement un dispositif et un procédé qui permet de réaliser un équilibrage d'un dispositif à batteries commutées, en particulier lorsque la sortie de celui-ci est court-circuitée.

Habituellement, dans un système de stockage utilisant des cellules Li-ion, on équilibre les cellules entre elles, afin de les garder dans un état de charge le plus uniforme possible, de sorte que toutes les cellules restent disponibles jusqu'à leur décharge complète.

Dans un pack batterie classique, avec des éléments connectés entre eux de manière figée, un tel équilibrage n'est pas possible, à moins de rajouter des convertisseurs qui permettent d'échanger de l'énergie entre les éléments (ce que l'on appelle l'équilibrage actif), ce qui est couteux, encombrant et induit un surpoids significatif (ajout d'inductances). De fait, les packs batterie classiques n'intègrent qu'un équilibrage de fin de charge, qui s'assure que tous les éléments soient pleinement chargées en fin de charge ; mais, durant la décharge, c'est le premier élément déchargé qui stoppe la décharge, même s'il reste de l'énergie dans les autres éléments : la décharge doit s'arrêter quand l'élément le plus déchargé arrive à son seuil de tension bas. De manière symétrique, la charge normale s'arrête dès qu'un élément est pleinement chargé, c'est-à-dire quand il atteint son seuil de tension haut.

Dans un tel système, il y a généralement un mécanisme dit d'« équilibrage de fin de charge » qui permet de finaliser la recharge des éléments non encore pleinement chargés : par exemple, l'élément ou les éléments complètement chargés (qui empêchent de poursuivre la charge) sont partiellement déchargés, ce qui autorise à nouveau le passage d'un courant de recharge jusqu'à ce qu'un ou plusieurs éléments arrivent en fin de charge et ainsi de suite jusqu'à ce que tous les éléments soient pleinement chargés. Normalement, si une certaine quantité de charges a été retirée aux éléments durant la décharge, une même quantité de charge réinjectée dans les éléments devrait permettre de retrouver l'état de charge initial au rendement coulométrique près. En pratique, il peut exister une petite dispersion de rendement coulométrique entre les éléments de sorte que l'état de charge final des éléments n'est pas homogène, d'où l'intérêt de ce type d'équilibrage. Par contre ce type d'équilibrage ne permet pas de gérer des éléments dont les capacités sont différentes : c'est toujours le premier élément déchargé qui stoppe la décharge, même s'il reste de l'énergie dans les autres éléments.

On connaît, par ailleurs, une architecture d'un dispositif à éléments commutées. Une telle architecture est par exemple connue des documents suivants : FR2972308, FR2972305, FR2972307, FR2977986, FR2951320, FR2944161.

Un dispositif (ou « pack ») à éléments commutés permet de faire un équilibrage en dynamique des éléments du pack, en connectant en série seulement les éléments souhaités et en contournant les autres éléments. Il permet, par exemple :

- en décharge, d'utiliser en priorité les éléments les plus chargés, afin de les ramener au plus vite vers l'état de charge des éléments les plus déchargés ;
- en charge, d'utiliser en priorité les éléments les plus déchargés, afin de les ramener au plus vite vers l'état de charge des éléments les plus chargées.

Cela permet de minimiser la différence de charge entre les éléments, tout au long de leur utilisation. En fin de charge, les éléments d'un dispositif à éléments commutées sont mieux équilibrés entre eux et il n'y a pas besoin, ou peu besoin, de décharger les éléments plus chargés pour terminer la charge, contrairement à un pack classique. Toutefois, quand il n'y a pas d'échange d'énergie avec l'extérieur, aucun courant ne traverse le pack batterie et par conséquent aucun équilibrage n'est possible. De plus, si certains éléments du pack alimentent une partie de l'électronique du système (microcontrôleur, drivers des interrupteurs, ...) ou des systèmes auxiliaires (chauffage/éclairage dans une voiture, ...), ils continuent à se décharger alors que le reste des éléments ne se déchargent pas ; dans un tel cas, plus le système reste dans une configuration « sortie déconnectée », plus le déséquilibre entre éléments sera important. Autrement dit, en cas de courant nul en sortie, les documents connus, cité ci-dessus, ne proposent pas de solution d'équilibrage. En effet, en l'absence de courant qui traverse le pack batterie, il n'est pas possible de faire varier l'état de charge des éléments.

Un problème qui se pose est donc de pouvoir effectuer ou poursuivre l'équilibrage des différents éléments d'une architecture d'un « pack » batterie, de type commuté, lorsque celui-ci est déconnecté de la charge ou fournit une tension nulle.

**EXPOSÉ DE L'INVENTION**

L'objectif de l'invention est de pouvoir effectuer un équilibrage des éléments d'une batterie ou d'un pack batterie quand celle-ci ou celui-ci est déconnecté(e) de la charge ou lui fournit une tension nulle.

L'invention propose un dispositif, ou pack, à batteries commutées, dont on peut équilibrer les éléments même quand le dispositif est déconnecté de la charge ou encore s'il fournit une tension nulle en sortie.

L'invention propose également un procédé permettant à un dispositif, ou pack, à batteries commutées, d'équilibrer les éléments du dispositif même quand celui-ci est déconnecté de la charge ou encore s'il fournit une tension nulle en sortie.

À cette fin, l'invention concerne un dispositif de type batterie ou pack de batterie comportant une première borne, une deuxième borne et une pluralité d'éléments de stockage d'énergie pouvant être mis en série et/ou en parallèle entre ladite première borne et ladite deuxième borne, chaque élément pouvant comporter:

a) des moyens de commutation pour le connecter en série et/ou en parallèle avec au moins un autre élément, ou pour le déconnecter d'un ou plusieurs autres éléments,
b) des moyens conducteurs pour conduire un courant, dit courant principal, par un circuit ou chemin (comportant au moins un conducteur) parallèle à l'élément, dit circuit ou chemin de « by-pass », lorsque l'élément est déconnecté ou n'est pas connecté en série et/ou en parallèle (ou encore : n'est connecté ni en série ni en parallèle) avec un ou plusieurs autres éléments, et/ou des moyens conducteurs pour placer ledit élément en parallèle d'un autre.

Le dispositif selon l'invention peut comporter:

c) des moyens pour établir un court-circuit entre ladite première borne et ladite deuxième borne de la batterie lorsque celle-ci est déconnectée ou fournit une tension nulle ;
d) des moyens de contrôle, spécifiquement adaptés pour sélectionner au moins un premier élément de stockage d'énergie dans un premier état et au moins un deuxième élément de stockage d'énergie dans un deuxième état et pour faire circuler un courant au moins du premier élément vers au moins le deuxième élément, ou entre ces 2 éléments au moins, lorsque la première borne et la deuxième borne du dispositif sont court-circuitées.

Dans la présente demande un élément en « by-pass » est un élément déconnecté mais avec des moyens, formant par exemple un circuit (pouvant comporter un ou plusieurs éléments conducteurs, par exemple un transistor) ou chemin parallèle ou alternatif à l'élément déconnecté, permettant la circulation d'un courant, dit courant principal, dans la batterie ; le courant passe alors par ces moyens, par exemple par ce circuit ou chemin parallèle ou alternatif à celui de l'élément, par exemple par un ou plusieurs élément(s) conducteur(s) parallèle(s) qui est/sont resté(s) connecté(s) ou encore par un ou plusieurs élément(s) conducteur(s); ce circuit ou chemin parallèle est parcouru par le courant par exemple via la fermeture d'au moins un moyen formant interrupteur alors qu'un interrupteur série (ou le(s) moyen(s) de commutation pour connecter l'élément en série avec au moins un autre élément) de l'élément est ouvert ; un chemin de « by-pass » d'un élément peut donc être une portion de circuit ou un chemin alternatif à cet élément pour le courant de la batterie ou du pack.

De manière générale, on cherche, dans le cadre de la présente invention, à équilibrer un état d'un ou plusieurs éléments de la batterie ou du pack, cet état étant par exemple défini par une fonction qui dépend de, ou est représentatif de, l'état de charge, et/ou de la tension, et/ou de l'état de santé, et/ou de la température, et/ou de l'impédance, et/ou de la puissance disponible de l'élément. Cette fonction peut être la fonction identité, auquel cas l'état est, ou est représenté par, par exemple un ou plusieurs des paramètres définis au moins par la charge (ou l'état de charge), et/ou la tension, et/ou l'état de santé, et/ou la température, et/ou l'impédance, et/ou la puissance disponible. Par conséquent, un « état » peut-être un état de charge, mais on décrit également d'autres types d'états. Par exemple l'état de chaque élément peut être représentatif de sa charge et/ou de sa tension, par exemple de la charge et/ou de la tension de l'élément corrigé(e) en fonction de la température et/ou de l'état de santé.

Les moyens de contrôle d'un dispositif selon l'invention peuvent donc être spécifiquement adaptés pour arrêter le courant, qui circule au moins du premier élément vers au moins un deuxième élément, ou qui circule entre ces 2 éléments au moins, lorsque la première borne et la deuxième borne du dispositif sont court-circuitées, par exemple lorsque l'état d'au moins ce premier élément a une valeur égale à, ou proche de, celui d'au moins le deuxième élément ou de la valeur moyenne de cet état pour au moins une partie des éléments.

D'une manière générale, ici et dans le reste de cette description, on entend qu'une valeur est « proche » d'une autre valeur, ou que ces 2 valeurs sont « sensiblement » égales, si ces 2 valeurs sont différentes d'au plus 5 % ou d'au plus 20 % (en précision relative) ou d'au plus 10 % par rapport à la pleine échelle (en précision absolue).

L'invention concerne également un procédé d'équilibrage d'un dispositif de type batterie ou pack de batterie, comportant une première borne, une deuxième borne et une pluralité d'éléments de stockage d'énergie en série pouvant être mis en série et/ou en parallèle entre ladite première borne et ladite deuxième borne, chacun pouvant être associé avec des moyens de commutation pour le connecter en série et/ou en parallèle ou le déconnecter et éventuellement le bypasser; ce procédé peut comporter :

a) - l'établissement d'un court-circuit entre ladite première borne et ladite deuxième borne du dispositif lorsque celui-ci est déconnecté ou fournit une tension nulle ;

b) - la sélection d'au moins un premier élément de stockage d'énergie ayant un premier état et d'au moins un deuxième élément de stockage d'énergie ayant un deuxième état ;

c) la circulation d'un courant, au moins du premier élément vers au moins le deuxième élément, ou entre ces 2 éléments au moins.

La circulation de ce courant peut être arrêtée lorsque l'état du premier élément a une valeur égale à, ou proche de, l'état du deuxième élément ou d'une valeur moyenne de cet état pour au moins une partie des éléments.

Selon l'invention, on peut donc refermer le circuit électrique (par court-circuit en sortie du pack de batterie) et faire passer du courant à travers le pack de batterie, de manière à charger certains éléments pendant que d'autres se déchargent. Il est ainsi par exemple possible de transférer de l'énergie des éléments, par exemple les plus chargés et/ou les plus chauds, vers les éléments les moins chargées et/ou les moins chauds, alors que la tension en sortie du dispositif reste nulle.

En choisissant, au fur et à mesure, les éléments à connecter, il est par exemple possible de charger ou de décharger certains éléments en priorité, afin de garder l'ensemble des éléments équilibrés du point de vue de la charge.

Il est possible, par exemple à l'aide de moyens conducteurs, de conduire un courant, dit courant principal, par un circuit ou chemin (comportant au moins un conducteur) parallèle à l'élément, dit circuit ou chemin de « by-pass », lorsque l'élément est déconnecté ou n'est pas connecté en série et/ou en parallèle (ou encore : n'est connecté ni en série ni en parallèle) avec un ou plusieurs autres éléments, et/ou il est possible, par exemple à l'aide de moyens conducteurs, de placer ledit élément en parallèle d'un autre. Dans un dispositif ou un procédé selon l'invention, chaque élément peut comporter une ou plusieurs cellule(s) et/ou cellule(s) électrochimique(s) élémentaire(s) et/ou une ou plusieurs capacité(s) et/ou une ou plusieurs super capacité(s) et/ou une ou plusieurs de stockage.

Dans un dispositif selon l'invention, les moyens de contrôle peuvent être spécialement adaptés pour calculer, ou bien dans un procédé selon l'invention on peut calculer, pour chaque élément, un état ou un coefficient ($c_{cell\_i}$), dit de priorité, qui définit un ordre de charge ou de décharge des éléments, ce coefficient pouvant être normalisé (c'est-à-dire que la valeur de ce coefficient est rapportée à sa valeur maximale, la valeur maximale normalisée étant égale à 1); ce coefficient est par exemple un coefficient représentatif de la tension de l'élément concerné et/ou un coefficient représentatif de son état de charge et/ou un coefficient représentatif de son état de santé et/ou un coefficient représentatif de sa température et/ou un coefficient représentatif de son impédance et/ou un coefficient représentatif de sa puissance, et/ou éventuellement une fonction quelconque ou une pondération quelconque, par exemple la moyenne, de ce ou de ces coefficient(s) pour au moins une partie des éléments. Par « moyenne » on entend, ici et dans toute la description, soit la moyenne au sens mathématique du terme, soit une valeur vers laquelle on cherche à faire tendre l'état de l'ensemble des éléments.

Dans un dispositif selon l'invention, les moyens de contrôle peuvent être spécialement adaptés pour effectuer, ou bien un procédé selon l'invention comporte :

- la sélection d'au moins un premier élément et d'au moins un deuxième élément telles que le coefficient de premier élément est supérieur au coefficient du deuxième élément ;
- la circulation d'un courant au moins dudit premier élément vers au moins ledit deuxième élément, ou entre au moins ces deux éléments, lorsque la première borne et la deuxième borne du dispositif sont court-circuitées.

Dans un dispositif selon l'invention, les moyens de contrôle peuvent être spécialement adaptés pour réguler, ou bien dans un procédé selon l'invention on peut réguler, par exemple à l'aide desdits moyens de contrôle spécifiquement adaptés à cette fin, le courant qui circule au moins du premier élément vers au moins le deuxième élément, ou entre au moins ces deux éléments, lorsque l'entrée et la sortie du dispositif sont court-circuitées.

Par exemple, on régule ce courant en fonction de l'écart entre le coefficient du premier élément et du deuxième élément ou en fonction de l'écart entre au moins le coefficient du premier élément et/ou du deuxième élément et une moyenne de ce même coefficient calculé pour plusieurs éléments.

Dans un dispositif selon l'invention, les moyens de contrôle peuvent être spécifiquement adaptés à, ou dans un procédé selon l'invention, on peut comparer, par exemple à l'aide desdits moyens de contrôle spécifiquement adaptés à cette fin, le coefficient ($C_{cell\_i}$) .d'un ou plusieurs éléments et/ou la somme des coefficients ($C_{cell\_i}$) de plusieurs éléments, à la moyenne ($c_{moyen}$) du même coefficient d'au moins une partie des éléments.

Dans un dispositif selon l'invention, les moyens de contrôle peuvent être spécifiquement adaptés à, ou dans un procédé selon l'invention, on peut, par exemple à l'aide des moyens de contrôle spécifiquement adaptés à cette fin:

- sélectionner n ($n \geq 1$) premier(s) élément(s) de stockage d'énergie dans un premier état de charge parmi les éléments dont le coefficient ($C_{cell\_i}$) est supérieur à la moyenne ($c_{moyen}$) du même coefficient de l'ensemble des éléments ;

- sélectionner n (n≥1) deuxième(s) éléments(s) de stockage d'énergie dans un deuxième état de charge parmi les éléments dont le coefficient ($C_{cell\_i}$) est inférieur à la moyenne ($C_{moyen}$) des coefficients de l'ensemble des éléments;
- faire circuler un courant dudit ou desdits n premier(s) éléments(s) vers ledit ou lesdits n deuxième(s) éléments(s) (n>0), ou entre au moins ce ou ces n premier(s) éléments(s) et ledit ou lesdits n deuxième(s) éléments(s), lorsque la première borne et la deuxième borne du dispositif sont court-circuitées ;
- éventuellement arrêter la circulation du courant lorsque le coefficient de la ou des n (n≥1) premier(s) éléments(s) de stockage d'énergie est égal au, ou proche du, coefficient du ou des n (n≥1) deuxième (s) éléments(s) de stockage d'énergie.

Dans un tel dispositif selon l'invention, les moyens de contrôle peuvent être spécifiquement adaptés à, ou dans un procédé selon l'invention, on peut, par exemple à l'aide desdits moyens de contrôle spécifiquement adaptés à cette fin :

- faire une première somme des tensions d'au moins une partie des premiers éléments dont le coefficient ($c_{cell\_i}$) est supérieur à la moyenne ($c_{moyen}$) des coefficients de l'ensemble des éléments ;
- faire une deuxième somme des tensions d'au moins une partie des deuxièmes éléments dont le coefficient ($c_{cell\_i}$) est inférieur à la moyenne ($c_{moyen}$) des coefficients de l'ensemble des éléments;
- faire circuler un courant entre ladite au moins une partie des premiers éléments et ladite au moins une partie des deuxièmes éléments.

Un dispositif selon l'invention peut comporter en outre des moyens pour inverser, ou non, la polarité d'un ou plusieurs éléments.

Un procédé selon l'invention peut comporter une inversion de la polarité d'un ou plusieurs éléments.

Dans un dispositif ou dans un procédé selon l'invention, on peut, par exemple à l'aide des moyens de contrôle spécifiquement adaptés à cette fin, faire circuler, d'au moins un premier élément vers au moins un deuxième élément, d'abord un courant constant, puis un courant à tension constante.

L'invention peut s'appliquer à tous les systèmes de stockage basés sur une architecture commutée, c'est-à-dire une batterie ou un ensemble de batteries, composé(e) d'éléments pouvant être mis en série, déconnecté(s), contourné(s) par un chemin parallèle ou mis en série avec une possible inversion de polarité, ou encore mis en parallèle avec un élément voisin. Un « élément » peut être une cellule élémentaire ou un groupe de cellules élémentaires connectées en série et/ou parallèle. D'une manière générale, l'invention s'applique aussi aux cas où les éléments sont associés à des convertisseurs DC/DC.

L'invention peut s'appliquer à des batteries comportant plusieurs accumulateurs relevant de technologies différentes (par exemple différentes chimies de batterie, des capacités, des super-capacités...) et/ou de différentes technologies de générateurs (pile à combustible, panneaux solaires...).

Dans la présente demande, une référence à un ou des élément(s) commutée(s) doit se comprendre comme couvrant également une combinaison de plusieurs cellules électrochimiques, et/ou plusieurs capacités, et/ou plusieurs piles à combustible, et/ou plusieurs source/générateur d'énergie....

Une combinaison de plusieurs éléments pouvant être connectées en série et/ou parallèle est aussi appelé « module ».

L'invention permet également de maintenir les éléments équilibrés durant la charge, en priorisant les éléments déchargés durant toute la recharge de sorte que tous les éléments soient complètement chargés en même temps. Dans certains cas, il peut être décidé que les éléments soient utilisés différemment durant une bonne partie de la recharge, par exemple pour autoriser des courants de recharge très important. Dans ce cas, on privilégie par exemple les éléments les moins impédants (qui ont une résistance interne faible) et seulement à l'approche de la fin de charge on se préoccupe de rééquilibrer l'état de charge des éléments. Ceci est possible grâce à la forte capacité intrinsèque d'équilibrage de ce type de batterie : il est facile d'obtenir un courant moyen pour un élément 2 fois supérieur à celui d'un autre élément. Cette capacité d'équilibrage peut être encore plus importante en s'autorisant à placer des éléments dans une polarité opposée aux autres éléments, c'est-à-dire que certains éléments, à un même instant, peuvent se décharger pendant que d'autres se rechargent.

De manière symétrique, l'invention permet également de maintenir les éléments équilibrés durant la décharge, en priorisant les éléments chargés durant toute la décharge de sorte que tous les éléments soient complètement déchargés en même temps. Dans certains cas, il peut être décidé que les éléments soient utilisés différemment durant une partie de la décharge, par exemple pour satisfaire temporairement un besoin important en courant de l'équipement électrique connecté. Dans ce cas, on privilégie par exemple les éléments les moins impédants (qui ont le moins de chute résistive) et en dehors de ces pics de courant, on se préoccupe de rééquilibrer l'état de charge des éléments. Ceci est possible grâce à la forte capacité intrinsèque d'équilibrage de ce type de batterie : il est facile d'obtenir un courant moyen pour un élément 2 fois supérieur que pour un autre élément. Cette capacité d'équilibrage peut être encore plus importante en s'autorisant à placer des éléments dans une polarité opposée aux autres éléments, c'est-à-dire que certaines éléments peuvent se recharger pendant que d'autres se recharge.

L'invention permet de réaliser un équilibrage d'une batterie ou d'un pack batterie, par échange d'énergie entre les éléments lorsqu'elle/il n'a pas d'échange électrique avec l'extérieur par ses bornes principales. Cet équilibrage peut en particulier avoir lieu lors de pauses en phase de charge, ou lors de pauses en phase de décharge. L'invention peut être mise en oeuvre par exemple en mettant en court-circuit ses bornes principales, par exemple afin d'assurer certaines fonctions.

L'invention permet, « en décharge », de rééquilibrer la charge des éléments du pack, en transférant une partie de l'énergie des éléments plus chargés (par exemple les plus impédants, qui ont été moins utilisés) vers les éléments moins chargés (par exemple les moins impédantes, qui ont été le plus utilisés).

De manière symétrique, l'invention permet, « en charge », de rééquilibrer la charge des éléments du pack, en transférant une partie de l'énergie des éléments plus chargées (les moins impédants, qui ont été plus utilisés) vers les éléments moins chargés (les plus impédants, qui ont été le moins utilisés).

Dans un cas où, pendant l'utilisation du pack, le paramètre optimisé ne soit pas l'équilibrage des éléments (comme pour l'exemple précédent), il est possible que, en fin de charge, des éléments soient complètement chargées alors que d'autres ne le soient pas et qu'il ne soit possible de continuer la charge. En mettant en court-circuit la sortie, l'invention permet de rééquilibrer les éléments et de reprendre en suite la charge avec un pack équilibré.

## BRÈVE DESCRIPTION DES DESSINS

Des exemples de réalisation de l'invention seront maintenant décrits en référence aux dessins annexés dans lesquels :

[Fig. 1] représente une réalisation d'un pack de batterie selon l'invention, mettant en oeuvre une architecture à éléments commutés, muni de moyens pour court-circuiter sa sortie;
[Fig. 2] représente schématiquement une réalisation des moyens de commande mise en oeuvre dans le cadre d'un pack de batterie selon l'invention;
[Fig. 3] représente des étapes d'un procédé selon l'invention;
[Fig. 4] représente une variante du dispositif de la figure 2, avec une inductance en sortie;
Fig. 5] représente encore une autre variante d'un dispositif selon l'invention, avec plusieurs interrupteurs permettant d'en court-circuiter la sortie ;
[Fig. 6] - [Fig. 8] permettent d'expliquer des exemples de coefficients de priorité.

## EXPOSÉ DÉTAILLÉ DE MODES DE RÉALISATION PARTICULIERS

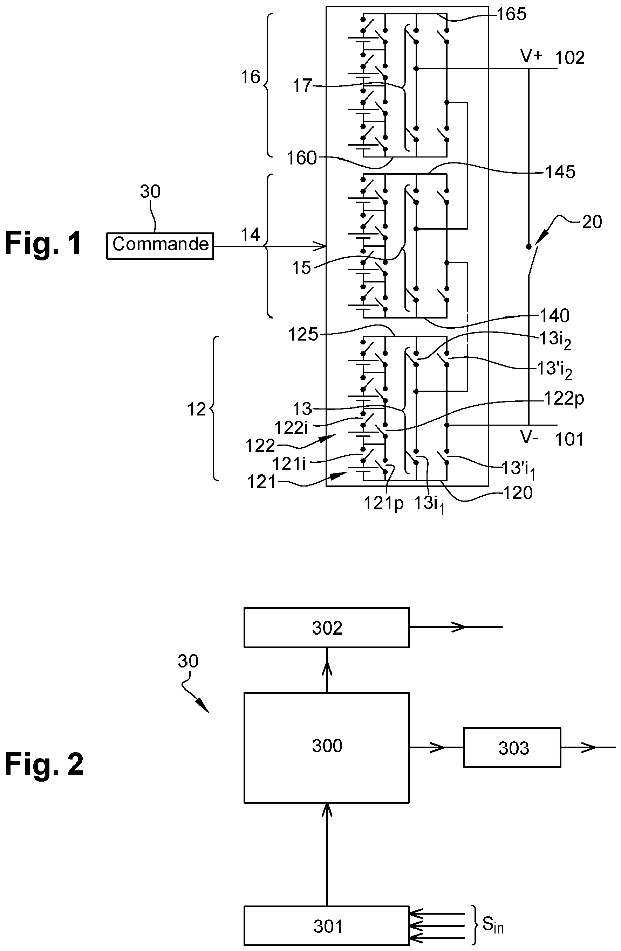

La figure 1 représente un pack batterie en architecture commutée, qui peut être mise en oeuvre dans le cadre de la présente invention.

Un tel pack peut comporter M modules (Ei, (1<i<M)) 12, 14, 16, chaque module comportant une pluralité de Ni (le nombre Ni pouvant être variable d'un module à l'autre) éléments 121-124,141-144,161-164. En figure 1, M=3 et N=4, mais M peut être quelconque et le nombre N peut aussi être quelconque pour chaque module (par exemple, un module peut comporter un seul élément). Par exemple M peut être inférieur ou égal à 500 ou à 1000 ; pour M = 500, dans le cas de modules Ei comportant chacun N=2 éléments de 1,5 V, la tension fournie à ses bornes par le pack peut atteindre 1500 V. Par exemple encore N peut être inférieur ou égal à 250 ou à 500 ; pour N = 250, dans le cas de 2 modules Ei comportant chacun 250 éléments de 1,5 V, la tension fournie à ses bornes par le pack peut atteindre 1500 V. Plusieurs modules peuvent comporter plusieurs séries d'éléments ou de cellules, ces séries étant disposées en parallèle l'une de l'autre.

Chaque module comporte une 1ère borne 120, 140, 160 et une 2ème borne 125, 145, 165. Cette architecture à éléments commutés permet:

- de réguler un courant de charge lorsqu'il est connecté à une source de tension, continue ou alternative, en ajustant en temps réel le nombre d'éléments placées en série ;
- et/ou de prélever sur un réseau AC un courant AC en phase avec la tension réseau grâce à un mécanisme de synchronisation ;
- et/ou d'assurer des services réseau en prélevant un courant déphasé par rapport à la tension réseau (compensation de puissance réactive) ou en ajoutant des harmoniques de courant ou pulse de courant pour améliorer la forme de la tension réseau/compenser des perturbations réseau ;
- et/ou de gérer de manière unitaire chaque élément du système, qui peut être soit connecté en série avec les autres éléments du pack batterie, soit isolé et contourné par un chemin parallèle ou un élément parallèle (il n'y a alors plus de courant qui passe par l'élément, mais le courant circule sur un chemin en parallèle de celle-ci ou de celui-ci), soit mis en série, avec une polarité opposée, avec les autres modules, ; en particulier, on peut noter qu'un élément a la même polarité que les autres éléments du même module ; si 2 modules du pack ont des polarités opposées, les éléments du premier module auront une polarité opposée aux éléments du second module; par exemple, dans le cas de la figure 1, une inversion de tension s'effectue au niveau des modules 12, 14, 16, chaque module pouvant contenir un élément ou bien plusieurs éléments commutables c'est-à-dire accompagné de transistors de commutation, chacun des éléments eux-mêmes pouvant contenir plusieurs cellules électrochimiques en série et/ou parallèle ;

- et/ou de générer, en sortie de la batterie, une tension fixe ou une tension variable (par exemple sinusoïdale), avec un pas égal à la tension d'un élément, en connectant, l'un après l'autre, les éléments directement à la sortie du système. En effet, un tel système peut faire évoluer dynamiquement le nombre d'éléments connectés en série, parmi les éléments disponibles.

Un « élément » au sens du présent texte peut représenter un groupe de cellules élémentaires placées en série et/ou parallèle, le pas de tension peut alors être par exemple de l'ordre de 3.6 V, de 12V de 24V, de 48V ou d'une tout autre valeur.

Comme déjà indiqué ci-dessus, chaque élément peut être mis en série ou en parallèle avec d'autres éléments du même module ou être isolé et le courant principal dévié sur un chemin parallèle et/ou remplacé(e) par un court-circuit. A cette fin, des interrupteurs, par exemples des transistors, sont prévus. Dans cet exemple, comme les autres exemples ou modes de réalisation de la présente demande, les interrupteurs peuvent être réalisés à l'aide de transistors de puissance, de préférence de type NMOS, ou de transistors bipolaires, ou FET, ou JFET, ou IGBT. Les interrupteurs ainsi mis en oeuvre permettent d'utiliser ou non certains éléments et/ou certains modules d'éléments en fonction des besoins et/ou réaliser une optimisation de l'utilisation du pack batterie.

Comme dans l'exemple illustré, chaque élément peut être muni (seuls certains interrupteurs associés à l'élément 121 sont numérotés sur la figure 1) :

- d'un ou plusieurs interrupteur(s) d'élément $121_i$ pour connecter ou déconnecter cet élément de la batterie ; il est possible d'avoir plusieurs éléments en parallèle avec chaque élément qui possède son interrupteur série ; dans ce cas, un élément peut être déconnecté et le courant principal continue de passer au travers des éléments restant en parallèle ; et/ou on peut, comme dans FR2977986, basculer des éléments ou cellules d'une configuration série à parallèle et inversement, et/ou écarter l'élément ou la cellule ;
- d'un ou plusieurs interrupteur(s) parallèle(s) $121_p$ pour bypasser, ou non, cet élément, donc d'établir un chemin conducteur parallèle à l'élément un court-circuit de cet élément lorsque celui-ci est déconnecté, en particulier au regard du courant principal qui circule sur le chemin de puissance entre les bornes 101 et 102 du pack batterie.

Le pack de batterie et/ou chaque élément, ou un ou plusieurs éléments, peu(ven)t être munie(s) d'un capteur de charge de l'élément et/ou d'un capteur de mesure de tension aux bornes de l'élément et/ou d'un capteur de mesure de température de l'élément et/ou d'un capteur de déformation mécanique de l'élément et/ou d'un capteur de gaz dans l'élément (par exemple pour détecter une surcharge, ou une surchauffe ou une fuite qui peut engendrer la génération de gaz) et/ou d'un capteur acoustique (soit pour détecter une réaction chimique dans l'élément, ou bien, s'il s'agit d'un capteur de type ultrason, pour caractériser l'élément, de manière similaire au principe de l'échographie ou sous forme de caractérisation d'un canal acoustique) et/ou un capteur chimique, par exemple pour mesurer la densité d'ions Li libres ou autres dans l'élément. On peut en général mesurer l'état de charge (« SOC ») ou l'état de santé (« SOH ») à partir des mesures de tension et/ou de courant et/ou de température.

D'une manière générale, l'état de santé est défini par la dégradation de la quantité de charge qu'une cellule (ou plus généralement un élément) peut stocker/délivrer, par rapport à son état d'origine (avant toute utilisation), à isocourant. Un SOH de 100% vaut pour une absence de dégradation, un SOH de 0% signifie que la cellule ne peut plus stoker d'énergie.

On peut aussi le définir par le rapport de capacité en Ah entre la capacité de la cellule (ou plus généralement un élément) à un instant t et sa capacité quand elle était neuve. La capacité d'une cellule est le nombre d'Ampère-heure (Ah) (l'Ah est une unité homogène au Coulomb) que la cellule peut délivrer suite à une charge complète. Les Ampères-heures correspondent à une intégration du courant, pour la capacité il s'agit d'intégrer le courant entre le début et la fin de la décharge. On peut également trouver une définition du SoH sur le lien suivant :
https://www.labellebatterie.com/soh-batterie-et-capacite-ce-quil-faut-comprendre/

Le dispositif peut comporter un circuit de commande 30 qui permet, notamment, de commander l'ouverture et la fermeture des interrupteurs des différents éléments. Les signaux qui proviennent du ou des capteurs peuvent être transmis à ce circuit de commande.

De manière plus précise, comme illustré en figure 2, le circuit de commande 30 peut comporter:

- un processeur ou microprocesseur ou FPGA (« Field Programmable Gate Arrays ») ou ASIC (« Application-Specific Integrated Circuit ») 300 spécialement adapté pour, ou programmé pour, mettre en oeuvre un procédé selon l'invention ;
- des moyens, ou un circuit, 301 pour recevoir des signaux $S_{im}$ de mesure d'un ou plusieurs capteurs associé(s) à un ou plusieurs éléments du pack batterie et pour fournir ces signaux au processeur ou microprocesseur ;
- des moyens, ou un circuit, 302 pour contrôler l'état ouvert ou fermé des différents interrupteurs associés aux différentes éléments du pack batterie, et pour contrôler l'état ouvert ou fermé des différents interrupteurs des différents ponts en H (voir ci-dessous), sur instructions du processeur ou du microprocesseur ;
- des moyens, ou un circuit, 303 pour contrôler l'état ouvert ou fermé de(s) interrupteur(s) des moyens 20, par exemple sur instruction du processeur ou du microprocesseur.

Une électronique spécifique (non représentée sur les figures) peut être associée à chaque module 12, 14, 16. Dans ce cas, l'unité de commande 30 peut avantageusement communiquer avec chaque électronique spécifique de chaque module, par exemple via un bus de communication, par exemple encore un bus partagé et isolé galvaniquement. Le circuit de commande 30 peut par exemple :

- envoyer à l'électronique spécifique de chaque module la position que doivent prendre les interrupteurs au sein du module, que ce soit les interrupteurs de cellule et/ou les interrupteurs du pont en H (voir ci-dessous) du module ;
- et/ou éventuellement recevoir de la part des modules des informations qui ont été mesurés localement par l'électronique de chaque électronique spécifique ;
- et/ou éventuellement accéder (recevoir ou lire) à des mesures plus globales, par exemple la tension du pack batterie et/ou le courant qui traverse le pack batterie. Ces mesures globales sont faites par des moyens de mesure (capteurs), par exemple associés à l'unité de commande sans passer par l'électronique des modules. De même, la commande de l'interrupteur 20 peut ne pas passer par l'électronique des modules, mais par une interface électronique entre le circuit de commande 30 et l'interrupteur 20. Selon une réalisation particulière, les moyens (ou circuits) 302 et 303 et/ou 301 peuvent être intégrés dans une même unité.

Chaque module peut également comporter un pont en H 13, 15, 17 placé entre la 1ère borne et la 2ème borne du module, qui permet d'inverser ou non la polarité des éléments connectées ; en variante, non représentée sur les figures, on peut mettre en oeuvre un permutateur commandé, par exemple un relais électromécanique qui fait permutateur (dans la suite, on ne décrit que la variante mettant en oeuvre des ponts en H, mais l'invention peut tout aussi bien être adaptée au cas de permutateurs). Ce pont comporte les moyens interrupteurs $13_{i1}$, $13_{i2}$, $13'_{i1}$, $13'_{i2}$ ... (seuls les interrupteurs du pont en H 13 associé au module 12 sont numérotés sur la figure 1) permettant de mettre en série un module avec le module suivant et/ou de relier le module à une 1ère borne (que l'on peut arbitrairement qualifier de borne d'entrée) 101 ou une 2ème borne (que l'on peut arbitrairement qualifier de borne de sortie) 102 du pack. Sur chaque branche du pont en H, un point entre les interrupteurs de cette branche peut être relié à un point entre les interrupteurs d'une branche d'un pont en H d'un module voisin ou de la 1ère borne 101 ou de la 2ème borne 102 de l'ensemble du système.

Chaque module 12, 14, 16 de l'exemple de la figure 1 peut connecter à la sortie 1, 2, 3 ou 4 éléments en série, dans les 2 sens de la polarité. Plus généralement, pour M modules, chaque module i ($1<i<M$) comportant Ni éléments ($1<N_i$), chaque module peut connecter à sa sortie 1, ...ou $N_i$ éléments en série, dans les 2 sens de la polarité.

Comme chaque module est indépendant : son pont en H peut être orienté de manière quelconque par rapport à celui des autres modules.

Des moyens 20 permettent de réaliser un court-circuit entre la borne 101 et la borne 102 du pack ; ces moyens 20 comportent par exemple un interrupteur, par exemple un transistor du type mentionné ci-dessus, disposé entre cette entrée et cette sortie. Ces moyens 20 sont par exemple commandés par les moyens de commande 30. On peut noter que, en variante, une commande manuelle est possible, bien que moins intéressante car l'opération n'est alors plus automatique.

Un exemple de procédé d'équilibrage selon l'invention, mettant en oeuvre un mode court-circuit à l'aide des moyens 20, est le suivant:

- les moyens 20 sont fermés ;
- l'état de charge des différents éléments est mesuré ou estimé ; en variante, cette mesure ou cette estimation peut avoir été faite avant fermeture des moyens 20;
- puis un ou plusieurs des éléments les plus chargés est/sont porté(s) à une première polarité et un ou plusieurs des éléments les plus déchargés est/sont porté(s) à la polarité opposée; le dispositif de commande 30 commande les interrupteurs des éléments, des modules et/ou des ponts en H pour faire circuler un courant du ou des élément(s) porté(s) à la première polarité (les plus chargés) vers le ou les élément(s) porté(s) à la deuxième polarité (les moins chargés); autrement dit, on régule un courant de la première polarité vers la deuxième polarité et de l'énergie est transférée du ou des élément(s) le(s) plus chargé(s) vers le ou les élément(s) le(s) plus déchargé(s) ;

- ce courant circule tant que l'élément ou les éléments qui est/sont en cours de charge n'a/ont pas atteint un niveau de charge prédéterminée, ou le même niveau de charge que l'élément ou les éléments le(s) plus chargé(s) ou le ou les autre(s) élément(s).

On peut mesurer ou estimer, de préférence en permanence ou de manière périodique, l'état des éléments connectés, afin d'identifier ou de déterminer la fin de l'équilibrage. L'invention permet donc de procéder à un équilibrage d'un état de charge. Mais elle permet également de procéder à d'autres types d'équilibrage, par exemple :

- En puissance maximale disponible
- Et/ou en énergie restante disponible
- Et/ou en température (on peut réchauffer les éléments: il est donc possible d'amener des éléments froids, ou les plus froids, vers une température plus chaude);Et/ou en cherchant à équilibrer les états de santé (en préservant par exemple le ou les élément(s) les plu(s) faible(s)/fragile(s)) ;
- Et/ou en cherchant à augmenter le rendement (en privilégiant le ou les élément(s) de plus faible résistance interne lors des pics de courant)

Et/ou en cherchant à augmenter la durée de vie....

Pour procéder à ces autres types d'équilibrage, on peut mesurer ou estimer la puissance (maximale ou restante) disponible et/ou l'état de santé et/ou le rendement et/ou la durée de vie par des méthodes d'estimation connues, par exemple la mesure de la résistance interne pour la puissance maximale disponible, ou la coulométrie pour l'énergie restante disponible, ou une décharge/charge complète pour l'état de santé. Autrement dit, on cherche alors à réguler l'état de différents éléments du pack batterie en fonction d'un ou plusieurs des paramètres (par exemple puissance maximale et/ou énergie restante,...) mentionnés ci-dessus.

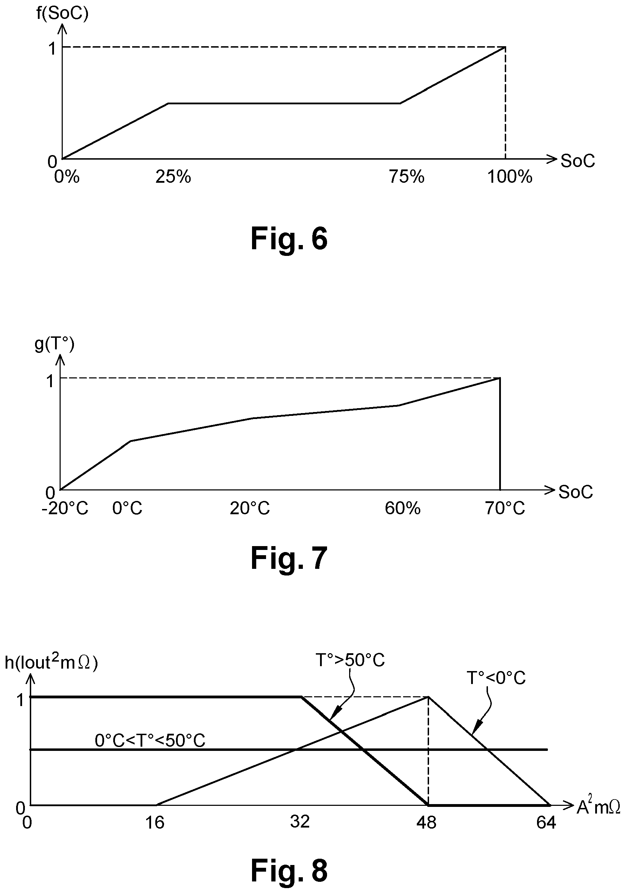

Selon un mode de réalisation de l'invention, on peut calculer, pour chaque élément i, un coefficient, ou un état, dit coefficient, ou état, de priorité, $c_{cell\_i}$, basé sur la tension de l'élément, et/ou sur son SOC (état de charge), et/ou sur son SOH (état de santé), et/ou sur sa température, et/ou sur son impédance ou de manière générale basé sur une pondération quelconque de paramètres relatifs à l'élément et/ou à la puissance demandée ou injectée dans la batterie à un instant donné. Des exemples de tels coefficients sont donnés à la fin de cette description. Dans certains cas, par exemple la tension, le coefficient, ou l'état, basé sur la tension de l'élément peut-être simplement la tension elle-même; plus généralement, dans sa forme la plus simple, ce coefficient peut se résumer au paramètre lui-même. De façon générale, l'état de l'élément que l'on cherche à équilibrer peut être représenté ou quantifié par une fonction du ou de(s) paramètre(s) mesuré(s). Le coefficient de priorité ou l'état peuvent être assimilés l'un à l'autre ou identifiés l'un avec l'autre. Le coefficient de priorité ou l'état peut être normalisé (et compris entre 0 et 1, voir les exemples des figures 6 à 8). Dans l'ensemble de la demande, on pourra utiliser indifféremment l'« état », ou le terme « état », ou le « coefficient », ou le terme « coefficient ».

Comme déjà expliqué ci-dessus, un élément :

- peut être ou comporter une cellule ou plusieurs cellules en série et/ou parallèle, par exemple en configuration fixe, sans interrupteur à piloter, comme par exemple celle(s) identifiés par les références 121 et 122 en figure 1 ;
- et/ou une unité commutée qui peut contenir plusieurs cellules élémentaires, mais on peut le gérer comme un ensemble qui ne fait qu'un.

A un élément peut être associé un coefficient ccell_i.

Ensuite on peut calculer, pour chaque élément, l'écart (ou le « delta ») entre son état, ou son coefficient de priorité, et l'état, ou le coefficient de priorité, moyen du pack batterie. Cette différence (delta) peut être positive (par exemple si un élément est plutôt chargée par rapport à la moyenne) ou négative (par exemple si un élément est plutôt déchargé par rapport à la moyenne). On nomme $\Delta c_{cell-i}$ l'écart entre l'état, ou le coefficient de priorité de l'élément i et l'état, ou le coefficient de priorité moyen :

[MATH 1]

$$\Delta c_{cell\_i} = c_{cell\_i} - c_{moyen}$$

Par exemple l'élément qui présente l'écart le plus élevé (positif) est l'élément que l'on veut le plus décharger et l'élément avec l'écart le plus faible (négatif) est l'élément que l'on veut le plus recharger. Plus généralement, on peut souhaiter décharger un élément i qui présente un 1$^{er}$ écart $\Delta c_{cell-i}$ et charger un élément i' qui a un écart $\Delta c_{cell-i'}$ plus faible ; de préférence, on cherche à ramener tous les états, ou coefficients, à la valeur moyenne de cet état, ou de ce coefficient, pour l'ensemble des éléments, annulant ainsi tous les écarts entre les différents états ou coefficients. On peut par exemple chercher à obtenir un courant moyen par l'élément sensiblement proportionnel à $\Delta c_{cell-i}$ (en valeur positive ou négative) ; à cette fin, on peut par exemple connecter chaque élément avec un rapport cyclique, qui peut être par exemple déterminé par une boucle d'asservissement, afin d'en réguler le courant. Cet asservissement permet aussi de limiter le courant qui circule dans les éléments, par exemple pour ne pas en dépasser les limites. Par conséquent, les moyens 30 ou 300 peuvent commuter les différents commutateurs du système pour faire par exemple circuler un courant :

- de l'élément dont le coefficient de priorité $\Delta c_{cell-i}$ présente l'écart le plus élevé (positif) et qui est l'élément que l'on veut le plus décharger ;
- à l'élément dont le coefficient à l'écart le plus faible (négatif) et qui est l'élément que l'on veut le plus recharger.

La valeur du $\Delta c_{cell-i}$ peut être contrôlée ou mesurée pour tout ou partie des différents éléments, par exemple de manière régulière ou pas, la circulation du courant étant interrompue lorsque la/les valeur(s) souhaitée du ou des $\Delta c_{cell-i}$ d'un ou plusieurs élément(s), est atteinte.

Pour déterminer le courant à faire circuler dans chaque élément, on peut procéder, dans un premier temps avec un courant constant, puis avec une tension constante afin de ne pas dépasser une tension limite pour chaque élément. En effet, chaque élément a une tension maximale de charge (et minimale de décharge) à ne pas dépasser, qui dépend de la chimie de l'élément. La charge (ou décharge) à courant constant se termine quand cette tension est atteinte. Puis, le courant est réduit au fur et à mesure, afin de ne pas dépasser la tension maximale (ou minimale). En effet, du fait de l'impédance interne de l'élément, plus le courant est élevé, plus la tension aux bornes de l'élément monte pendant la charge (et chute pendant la décharge).

En fin de charge, on peut réguler ou limiter le courant afin qu'aucun élément n'ait sa tension qui dépasse sa tension maximale autorisée de fin de charge. Pour cela, on peut mesurer l'écart en tension de chaque élément connecté par rapport à sa tension limite (Vmax-Vcell) et on peut par exemple limiter le courant de sorte que (Vmax-Vcell) se rapproche de 0 sans jamais être négatif pour l'élément qui en est le plus proche. Cela revient sensiblement à réguler la tension de l'élément ayant la tension la plus élevée sur une consigne de tension Vmax ; pour atteindre cet objectif, la boucle de régulation peut agir sur le courant à faire circuler.

Le courant à faire circuler et/ou la stratégie d'ouverture/fermeture des différents commutateurs du pack batterie, peut/peuvent être déterminé(e)(s) par les moyens 30 ou 300.

Selon un exemple de réalisation, il est possible de :

- calculer les $\Delta c_{cell-i}$ pour tous les i (c'est-à-dire pour tous les éléments concernés) ;
- connecter tous les éléments en positif ou en négatif, selon le signe de leur $\Delta c_{cell-i}$. On peut ne pas connecter les éléments avec $\Delta c_{cell-i}$ = zéro ou proche de zéro, car ils sont déjà équilibrés ;
- puis déterminer, pour chaque élément, un courant de sortie, par exemple de type courant constant, puis éventuellement à tension constante, si un des éléments à équilibrer est proche de sa tension de fin de charge ou de fin de décharge, selon que l'on est respectivement en mode charge ou décharge pour cet élément;
- puis réguler le courant de sortie en appliquant un coefficient d'offset $c_{offset}$ au delta $\Delta c_{cell-i}$ d'un ou plusieurs ou tous les éléments :

[MATH 2]

$$\Delta c_{cell\_i} = c_{cell\_i} - c_{moyen} + c_{offset'}$$

Autrement dit, les moyens 30 ou 300 calculent, à partir d'une mesure d'erreur entre le courant de sortie mesuré et le courant souhaité, un tel coefficient d'offset et l'appliquent aux $\Delta c_{cell-i}$ concernés. Cela peut être réalisé par une boucle de régulation, par exemple exécutée à 20kHz, c'est-à-dire toute les 50ms ; ou encore à tout autre fréquence, par exemple entre 10kHz et 1MHz.Une boucle de régulation, par exemple dédiée à chaque élément, peut par ailleurs être mise en oeuvre pour réguler, par exemple individuellement, le courant de chaque élément à une proportion du courant principale, afin de permettre à l'élément d'atteindre le courant souhaité. Cette boucle de régulation a pour effet de faire passer par l'élément tout ou partie du courant principal, par exemple en ajustant un rapport cyclique de connexion de l'élément.

En ajoutant un offset sur le/les delta ($\Delta c_{cell-i}$), la boucle d'asservissement du courant principal, aussi nommé courant de sortie, qui traverse le pack batterie, agit sur la proportion de Delta positif et négatif et donc sur le nombre moyen d'élément connectés en positif et négatif et donc sur la tension à vide qui se retrouve aux bornes de l'impédance équivalente Z du pack placé en court-circuit. En maîtrisant ainsi la tension aux bornes de l'impédance Z, la boucle est à même d'agir sur le courant de sortie et de le réguler.

Le courant de chaque élément est ainsi régulé de sorte à, selon sa polarité, prendre ou à donner une proportion du courant de sortie, par exemple proportionnel à son $\Delta c_{cell-i}$.

La valeur du $\Delta c_{cell-i}$ peut être contrôlée ou mesurée pour tout ou partie des différents éléments, par exemple de manière régulière ou pas, la circulation du courant étant interrompue (par ouverture de l'interrupteur 20) lorsque la/les valeur(s) souhaitée, par exemple une valeur prédéterminée, des $\Delta c_{cell-i}$ est atteinte.

L'équilibrage s'arrête par exemple quand le delta (sans prendre en compte l'offset) de toutes les éléments atteint zéro (ou s'en rapproche suffisamment).

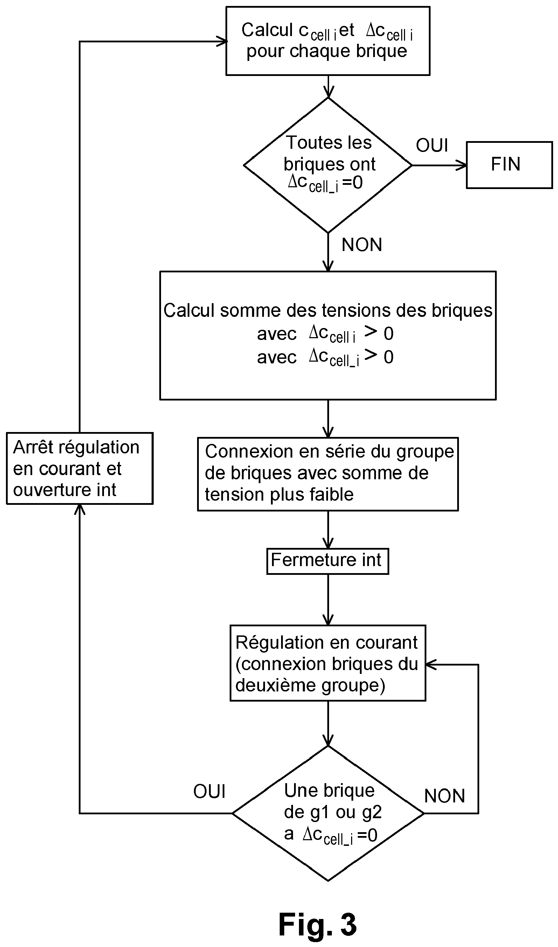

Selon un autre procédé, illustré en figure 3, il est possible, par exemple par les moyens 30 :

- de calculer les $\Delta c_{cell-i}$ pour tous les éléments (étape S1);
- puis (étape S3) de faire la somme des tensions de tous les éléments avec un $\Delta c_{cell-i}$ positif et de grouper ces éléments qui ont un $\Delta c_{cell-i}$ positif et de faire la somme des tensions de tous les éléments avec un $\Delta c_{cell-i}$ négatif et de grouper ces éléments qui ont un $\Delta c_{cell-i}$ négatif; éventuellement (étape S2) on peut écarter de ces sommes les éléments avec un $\Delta c_{cell-i}$ égal à zéro ou proche de zéro, car ils sont considérés comme déjà équilibrés ;
- de sélectionner un groupe $g_1$ d'éléments dont la somme des tensions ($V_{g1}$), lorsqu'ils sont connectés en série, est faible (étape S4) et un groupe $g_2$ d'éléments dont la somme des tensions ($V_{g2}$), lorsqu'ils sont connectés en série, est élevée; plus généralement, on peut avoir : $V_{g1} < V_{g2}$ ; en variante, on peut ne pas avoir l'étape précédente, c'est-à-dire qu'il est possible de sélectionner un groupe d'éléments $g_1$(resp. $g_2$) sans avoir préalablement fait la somme des tensions de tous les éléments avec un $\Delta_{cell-i}$ positif (resp. négatif);
- de connecter en série, dans une polarité donnée, les éléments du groupe avec une somme de tension plus faible, $g_1$, dans le même sens ;
- de fermer l'interrupteur 20 (étape S5) et contrôler l'ouverture et/ou la fermeture des commutateurs pour faire circuler un courant entre les 2 groupes $g_1$ et $g_2$, ce courant pouvant être positif ou négatif (étape S6) ;
- d'effectuer un asservissement en courant, de préférence en fonction des écarts de delta entre les éléments, qui régule le nombre d'éléments du groupe $g_2$ avec la somme de tension plus élevée, et qui est à connecter dans la polarité opposée aux éléments du premier groupe $g_1$: en modifiant en dynamique le nombre d'éléments du premier groupe $g_1$ et/ou le nombre d'éléments du deuxième groupe $g_2$ connectés en série, l'asservissement gère le courant en sortie et par conséquence régule le courant qui traverse les différents éléments.

Cet asservissement permet de réguler le courant qui traverse les éléments connectés, en modifiant en dynamique le nombre des éléments du groupe g2 qui sont connectés. Ainsi, il est possible de réduire les écarts de delta entre les états des éléments, en transférant de l'énergie des éléments avec un écart d'état positif vers les éléments avec un écart d'état négatif.

Les éléments des 2 groupes étant connectés en polarités inverses :

- si g1 contient les éléments avec écart négatif (donc à recharger), comme Vg1<Vg2, l'asservissement va connecter suffisamment d'éléments (ou tous les éléments) de g2, afin de décharger les éléments de g2 vers les éléments de g1.
- si g1 contient les éléments avec écart positif (donc à décharger), l'asservissement va connecter des éléments (mais pas tous) de g2, afin d'avoir Vg1>Vg2 et décharger les éléments de g1 vers les éléments de g2.

Par exemple, l'état, ou le coefficient, des éléments est calculé pendant le procédé (étape S1), et l'état, ou le coefficient moyen peut aussi être recalculé ainsi que l'écart $\Delta_{cell-i}$. Une fois qu'un élément atteint un $\Delta_{cell-i}$ égal à zéro, ou assez proche de zéro, il est déconnecté (étape S2) et une nouvelle configuration, pour le premier groupe $g_1$ et pour le deuxième groupe $g_2$, est calculée, les éléments déjà équilibrés n'étant pas inclus dans les nouveaux groupes $g_1$ et $g_2$ et l'asservissement en courant ne les utilisant plus pour réguler le courant ;

- de terminer l'équilibrage (par ouverture de l'interrupteur 20) quand tous les éléments ont atteint un $\Delta_{cell-i}$ égal à zéro, ou assez proche de zéro, car on considère alors que tous les éléments sont équilibrés.

Dans un procédé tel que décrit ci-dessus, on peut avoir intérêt à faire varier le nombre d'éléments dans le groupe g1, par exemple quand un seul élément du groupe g1 limite le courant maximal pour tout le groupe : en sortant temporairement cet élément le courant que le groupe g1 peut accepter augmente.

Le courant à faire circuler et/ou la stratégie d'ouverture/fermeture des différents commutateurs du pack batterie, peut/peuvent être déterminé(e)(s) par les moyens 30 ou 300. Ces moyens arrêtent l'équilibrage par ouverture de l'interrupteur 20.

Selon encore un autre procédé, il est possible, par exemple par les moyens 30 ou 300, d'effectuer un équilibrage sans régulation (on considère ici que l'égalisation de tension vaut équilibrage) ; les moyens 30 ou 300:

- calculent les $\Delta_{\text{cell-i}}$, par exemple en ne prenant en compte que la tension des éléments (le coefficient ou l'état de chacun des éléments étant alors égal à la tension de cet élément);
- contrôlent l'ouverture et/ou la fermeture des commutateurs pour faire circuler un courant de l'élément qui a le $\Delta_{\text{cell-i}}$ le plus élevé vers l'élément qui a le $\Delta_{\text{cell-i}}$ le moins élevé, ce dernier élément étant placé en polarité inverse par rapport au précédent ;
- puis recalculent les $\Delta_{\text{cell-i}}$, de préférence au moins des éléments connectés ou de tous les éléments; par exemple lorsqu'un élément parmi les éléments connectés a un $\Delta_{\text{cell-i}}$ égal à, ou proche d'un autre élément non connecté, alors les éléments de $\Delta_{\text{cell-i}}$ le plus élevé sont mis en série, de même que les éléments de $\Delta c_{\text{cell-i}}$ le plus faible (mais avec une polarité opposée) ; on peut noter que, par exemple au début, on peut n'avoir que 2 éléments connectés, donc lorsqu'un élément parmi les 2 éléments connectés a un $\Delta_{\text{cell-i}}$ égal à, ou proche d'un autre élément non connecté, alors les 2 éléments de $\Delta_{\text{cell-i}}$ le plus élevé sont mis en série, de même que les 2 éléments de $\Delta c_{\text{cell-i}}$ le plus faible (mais avec une polarité opposée) ;
- puis contrôlent l'ouverture et/ou la fermeture des commutateurs pour faire circuler un courant de ces 2 éléments de $\Delta_{\text{cell-i}}$ le plus élevé vers les 2 éléments qui ont les $\Delta_{\text{cell-i}}$ les moins élevés, ces derniers étant placés en polarité inverse par rapport aux précédents;
- puis recalculent les $\Delta_{\text{cell-i}}$ de préférence au moins des éléments connectés ou de tous les éléments); lorsqu'un élément connecté a un $\Delta_{\text{cell-i}}$ égal à, ou proche de, un autre élément non connecté, alors les 3 éléments de $\Delta_{\text{cell-i}}$ le plus élevé sont mis en série, de même que les 3 éléments de $\Delta_{\text{cell-i}}$ le plus faible (mais avec une polarité opposée) ;

Ce processus peut être poursuivi avec 4, puis 5... éléments. Lorsqu'on atteint n (n pair, n>2) éléments : les moyens 30 recalculent les $\Delta_{\text{cell-i}}$ de préférence au moins des éléments connectés ou de tous les éléments); lorsqu'un des n ou 2n éléments connecté a un égal à, ou proche de, un élément non connecté, alors les n+1 éléments de $\Delta_{\text{cell-i}}$ le plus élevé sont mis en série, de même que les n+1 éléments de le plus faible (mais avec une polarité opposée).

A chaque étape :

- si un 1$^{\text{er}}$ élément atteint un $\Delta c_{\text{cell-i}}$ nul, ou proche de zéro, il peut être écarté et, par symétrie, un 1$^{\text{er}}$ des éléments connectés en polarité opposée peut être aussi retiré, par exemple celui dont le $\Delta_{\text{cell-i}}$ est le plus proche de zéro ;
- si un $\Delta_{\text{cell-i}}$ élément atteint un $\Delta_{\text{cell-i}}$ nul, ou proche de zéro, il peut être écarté et, par 2ème symétrie, un des éléments connectés en polarité opposée peut être aussi retirée par exemple celui dont le $\Delta_{\text{cell-i}}$ est le plus proche de zéro ;
- et ainsi de suite jusqu'à ce qu'il n'y ait plus d'élément connecté ou jusqu'à ce que le courant échangé soit suffisamment faible pour considérer que l'équilibrage est terminé. Il est possible de recommencer le processus pour mieux équilibrer les éléments. En cas, par exemple, d'un nombre impair d'éléments, un élément ne sera pas connecté, alors si le processus est répété et si le delta de l'élément est suffisamment élevé, cet élément sera connecté et équilibré.

Entre autres, quand on écarte un élément avec un delta nul, on écarte aussi l'élément symétrique. Ce dernier élément n'a pas forcément un delta nul et recommencer le processus permet de mieux l'équilibrer.

Un élément qui a été déconnecté au cours du processus à un moment donné parce que son $\Delta c_{\text{cell-i}}$ a atteint une valeur proche de zéro peut être de nouveau connecté pour être impliqué dans le processus, par exemple suite à une mise à jour des $\Delta c_{\text{cell-i}}$, par exemple encore si son niveau de tension a évolué après une durée de relaxation.

L'intérêt de cet autre procédé est qu'en associant au départ les éléments de delta les plus éloignés, on maximise le courant transmis entre les deux éléments et on accélère ainsi la remise de ces éléments dans la plage de delta des autres éléments. En contrepartie, ce procédé complexifie un peu le fonctionnement et, s'il maximise le courant échangé, il ne maximise pas forcément la puissance échangée, le nombre d'éléments connectés étant au départ faible et donc la tension associée étant faible (P=UxI).

Selon encore un autre procédé, il est possible, par exemple par les moyens 30, d'effectuer un équilibrage sans régulation (on considère ici que l'égalisation de tension vaut équilibrage); les moyens 30 :

- calculent les $\Delta c_{\text{cell-i}}$, en prenant en compte que la tension des éléments ;
- Identifient et groupent les éléments ayant un $\Delta c_{\text{cell-i}}$ positif et identifient et groupent les éléments ayant un $\Delta c_{\text{cell-i}}$ négatif ;
- connectent tous les éléments du groupe moins nombreux (s'il y a plus d'éléments avec un delta positif (respectivement négatif), alors on connecte tous les éléments avec un delta négatif (respectivement positif)) ;

- connectent un même nombre d'éléments du deuxième groupe, par exemple ceux ayant le $\Delta_{\text{cell-i}}$ le plus éloigné du $\Delta_{\text{cell-i}}$ nul, avec polarité opposée aux éléments déjà connectés ; par exemple, si le pack contient 6 éléments avec un delta positif et 10 avec un delta négatif, on connectera tous les éléments avec un delta positif et, par symétrie, 6 éléments avec un delta négatif (les 6 éléments avec le delta le plus éloigné du delta nul).
- démarrage à l'étape 6: si on reprend l'exemple précédent, quand un élément atteint un delta égal ou proche de zéro, il peut être écarté et, par symétrie, un élément connecté en polarité opposé peut être également écarté, et cela jusqu'à ce que tous les éléments soient déconnectés. Le processus est donc répété (il faudra recalculer les deltas) pour équilibrer les éléments non connectés dans le cycle précédent. Autrement dit :
- si un 1$^{\text{èr}}$ élément atteint un $\Delta c_{\text{cell-i}}$ nul, ou proche de zéro, il peut être écarté et, par symétrie, un 1$^{\text{er}}$ des éléments connectés en polarité opposée peut être aussi retiré, par exemple celui dont le $\Delta c_{\text{cell-i}}$ est le plus proche de zéro ;
- si un 2$^{\text{ème}}$ élément atteint un $\Delta c_{\text{cell-i}}$ nul, ou proche de zéro, il peut être écarté et, par symétrie, un 2$^{\text{ème}}$ des éléments connectés en polarité opposée peut aussi être retirée par exemple celui dont le $\Delta c_{\text{cell-i}}$ est le plus proche de zéro ;
- et ainsi de suite jusqu'à ce qu'il n'y ait plus d'élément connecté ou jusqu'à ce que le courant échangé soit suffisamment faible pour considérer que l'équilibrage est terminé ;
- on peut répéter à nouveau le processus, jusqu'à ce que tous les éléments aient un $\Delta c_{\text{cell-i}}$ nul, ou proche de zéro.

Tous les procédés décrits ci-dessus peuvent être mis en oeuvre avec le dispositif décrit précédemment en lien avec la figure 1.

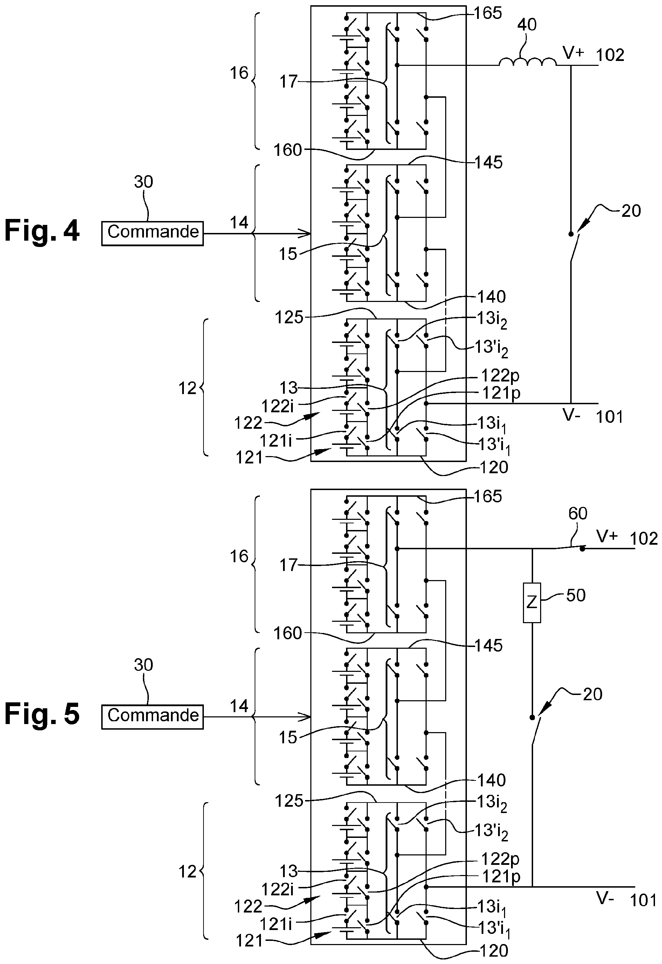

En variante, illustrée en figure 4, une inductance 40 de lissage, par exemple placée en sortie du pack batterie, permet de lisser le courant en sortie de celui-ci. Encore en variante (non représentée sur les figures) une inductance peut être répartie dans le pack batterie, par exemple en sortie de chaque module ou de chaque élément. Dans ce cas, l'interrupteur 20 est placé après l'inductance 40, comme en figure 4, afin de bénéficier aussi de cette inductance lors de la régulation du courant interne du pack batterie lorsqu'il est placé en position de court-circuit en sortie.

En variante, illustrée en figure 5, si, en sortie du pack batterie, il n'y a pas d'inductance, on peut en ajouter une (références 50 sur la figure 5) en série de l'interrupteur 20, afin de lisser le courant pendant l'équilibrage et aussi mieux le contrôler. Cette inductance ne sera pas utilisée dans le fonctionnement normal du pack. Alternativement, à la place de l'inductance, il peut y avoir un ou plusieurs composants électroniques, actifs ou passifs, permettant de lisser et/ou de limiter le courant.

Avec un tel composant en série à la sortie du système, la tension entre le pôle positif et le pôle négatif ne sera pas complètement nulle pendant l'équilibrage. Un second interrupteur 60 peut alors être utile pour éviter d'alimenter l'équipement branché sur le pack batterie avec cette tension résiduelle :

- en fonctionnement normal, l'interrupteur 20 est ouvert et l'interrupteur 60 est fermé ;
- pendant la phase d'équilibrage par court-circuitage de la sortie, l'interrupteur 60 est ouvert, et l'interrupteur 20 est fermé, soit en permanence soit avec un rapport cyclique variable.

Tous les procédés décrits ci-dessus et/ou avec les exemples de coefficients de priorité ci-dessous peuvent être mis en oeuvre avec le dispositif qui vient d'être décrit, que ce soit en lien avec la figure 1, 4 ou 5.

Des exemples de coefficients de priorités sont donnés ci-dessous, en lien avec les figures 6-8. Il s'agit d'exemples de coefficients autres que l'état de charge ou l'état de tension. En effet, par équilibrage, on sous-entend généralement un équilibrage des tensions ou des états de charge des éléments ; comme déjà expliqué, dans la présente demande on cherche plus généralement à équilibrer des états selon des coefficients de priorité qui ne sont pas forcément simplement une image de l'état de charge de l'élément.

Un premier exemple est le coefficient suivant :

[MATH 3]

$$c_{cell\_i} = f(SoC) + g(T^{\diamond}) + h(Iout^2 m\Omega)$$

Ce coefficient fait intervenir ;

- la fonction f (SoC), dont l'évolution en fonction de SoC est représentée en figure 6 ;
- la fonction g (T°), dont l'évolution en fonction de T est représentée en figure 7 ;
- la fonction h (Iout$^2$ m$\Omega$), dont l'évolution en fonction de I$^2$ est représentée en figure 8. Selon cet exemple, on peut prendre en compte le SoC en début de charge (par exemple pour $0 \leq SoC \leq 25\%$) et fin de charge (par exemple pour $75\% \leq SoC \leq 100\%$) et/ou y être insensible le reste du temps (la fonction f est constante dans au moins une partie du domaine entre par exemple 25% et 75%) pour privilégier d'autres aspects.

On connaît des procédés d'estimation d'état de charge (« SoC ») des éléments, par exemple par le document suivant qui décrit différentes manière d'estimer cet état de charge : M.A. Hannan, M.S.H. Lipu, A. Hussain, A. Mohamed, « A review of lithium-ion battery state of charge estimation and management system in electric vehicle applications : Challenges and recommendations », Renewable and Sustainable Energy Reviews, Volume 78, 2017, Pages 834-854, ISSN 1364-0321, https://doi.org/10.1016/j.rser.2017.05.001 Cette estimation de l'état de charge peut être utilisée, parmi d'autres, dans le cadre de la présente demande, notamment pour définir un coefficient de priorité d'utilisation des éléments.

La fonction g(T°) peut prendre en compte la température à basse température (ce qui est à prendre en compte pour le vieillissement et/ou la disponibilité en courant) et à haute température (du fait du risque de dégradation), avec de préférence une interdiction stricte au-delà d'une certaine température, par exemple au-delà de 70°C.

Pour la fonction h(Iout$^2$mΩ), on a représenté en figure 8 plusieurs caractéristiques, selon la température de l'élément considéré (0°C<T<50°C, T>50°C, T<0°C). Le paramètre **Iout$^2$mΩ,** représente directement la puissance d'échauffement de l'élément connectée à un instant t, l'impédance en **m**Ω représente typiquement la partie réelle de l'impédance de l'élément considéré.

Dans l'exemple donné, on peut avoir, pour :

- T°<0°C : une priorisation pour être réchauffée, c'est-à-dire à être utilisée quand le courant est plus élevé, avec éventuellement une limitation pour les très forts courants, un élément à basse température étant moins apte à fournir un courant élevé ;
- 0°C<T°<50°C : une priorité constante, sans recherche particulière d'échauffement ou de limitation de température ;
- T°>50°C : une utilisation préférée à faible courant pour limiter l'échauffement.

Les éléments ci-dessus sont donnés à titre d'exemple. On peut utiliser toute autre caractéristique tout en restant dans le cadre de la présente invention.

Un 2ème exemple peut être utilisé pour maximiser la disponibilité en puissance lors de la décharge. Par exemple, on cherche à disposer d'une puissance utile P$_{utile}$ le plus longtemps possible. La puissance maximale est typiquement limitée par la tension minimale de l'élément, sa température et sa résistance à l'état passant.

Pour ce faire, on estime, pour chaque élément, un SoC minimum (SoCmin) qui lui permet de fournir la puissance P$_{utile}$.

Ensuite, on définit un coefficient de priorité qui correspond à un écart entre le SoC actuel et ce SoC$_{min}$ pour chaque brique :

[MATH 4]

$$c_{cell_i} = SoC_i - SoCmin_i$$

Le mécanisme d'équilibrage cherchera alors à équilibrer les $c_{celli}$ et donc l'écart d'état de charge entre l'état actuel et l'état limite qui ne permet plus de fournir la puissance P$_{utile}$.

Il est possible de rajouter par ailleurs un coefficient k de pondération avec la température T pour limiter la dispersion en température :

[MATH 5]

$$c_{cell_i} = SoC_i - SoCmin_i + kT$$

Dans un 3ème exemple, on prend en compte l'état de santé (SoH) des éléments, en plus de leur état de charge (SoC) :

[MATH 6]

$$c_{cell\_i} = f(mode\_CH\_DCH) * g(SoC) * h(SoH)$$

Si on peut supposer que les éléments d'un pack batterie neuf ont toutes un état de santé égal (à 100%), cela n'est pas forcement vrai avec un pack qui a été utilisé. En effet, les éléments d'un pack ne vieillissent pas de la même manière et des écarts de SoH entre les éléments peuvent se créer au fur et à mesure de l'utilisation du pack.

Cette solution permet de normaliser l'état de charge d'un élément par rapport à son état de santé et de solliciter en priorité les éléments en meilleure santé.

Le mode de fonctionnement, charge ou décharge, peut être aussi pris en compte ; par exemple, on peut avoir :

```
f(mode_CH_DCH)=1
                , avec :
mode_CH_DH = décharge (pack en décharge)
f(mode_CH_DCH)=-1 avec :
        mode_CH_DCH = charge(pack en charge)
```

En pratique, à parité de SoC, en décharge, une partie de l'énergie des éléments avec un meilleur état de santé sera transférée vers les éléments avec un état de santé moins bon. De cette manière, toutes les briques tendront à arriver en fin de décharge en même temps. De manière symétrique, en charge, une partie de l'énergie des briques avec un état de santé moins bon sera transférée vers les briques avec un meilleur état de santé. De cette manière, toutes les briques tendront à arriver en fin de charge en même temps.

Dans un 4ème exemple, on prend en compte les Ah disponibles en décharge pour chaque brique :

[MATH 7]

$$c_{cell\_i} = f(Ah\_dispo\_DCH)$$

Ce mécanisme permet de redistribuer l'énergie du pack parmi les éléments, même quand ils n'ont pas la même capacité de départ. On peut par exemple avoir un pack composé d'éléments de chimies différentes, ce qui implique qu'ils ont des capacités différentes entre eux (selon leur chimie), même si ils ont tous le même SoH. En pratique, l'énergie des éléments avec plus d'Ah disponibles est transférée aux éléments moins capacitifs. De cette manière, tous les éléments arriveront en fin de décharge en même temps.

De manière symétrique, pendant la charge, le mécanisme permet de transférer l'énergie des éléments moins capacitifs vers les éléments plus capacitifs, afin de les faire toutes arriver en même temps en fin de charge. On aura donc :

[MATH 8]

$$c_{cell\_i} = f(Ah\_dispo\_CH)$$

Il est possible par ailleurs de faire une pondération avec la température T, afin de limiter la dispersion en température:

[MATH 9]

$$c_{cell\_i} = f(Ah\_dispo\_DCH) * kT$$

$$c_{cell\_i} = f(Ah\_dispo\_CH) * kT$$

Un cas particulier de cet exemple consiste à fixer, en décharge, un coefficient de priorité constant de valeur maximale pour les éléments plus capacitifs, afin de les décharger autant que possible vers les éléments moins capacitifs. Cela est utile si le pack contient des éléments « réservoir », des éléments de capacité élevée mais peu puissants (incapables de fournir des forts courants et donc impossibles à utiliser dans un fonctionnement normal). Le mécanisme tendra à décharger complètement les éléments réservoir vers les autres éléments, afin d'augmenter la durée de fonctionnement du pack en décharge. De manière symétrique, le coefficient de priorité des éléments « réservoirs » sera fixé à la valeur minimale pendant charge.

Dans les exemples ci-dessus, quand il est question de charge ou de décharge, on considère que l'on agit durant une pause de charge ou de décharge, c'est-à-dire avec une batterie placée en court-circuit (entre les bornes 101 et 102, comme en figures 1, 4, 5), c'est-à-dire une batterie qui est sans échange avec l'extérieur sur ses bornes principales 101, 102. Typiquement, pour un véhicule, on peut avoir des pauses entres deux utilisations ; de même, on peut introduire des pauses durant la recharge (soit volontaires, soit pour des besoins de délestage du réseau, de pics tarifaire, d'absence de soleil sur des panneaux solaire...).

**Revendications**

1. Dispositif de type pack de batterie comportant une première borne (101), une deuxième borne (102) et une pluralité d'éléments (12, 14, 16) de stockage d'énergie pouvant être mis en série entre ladite première borne et ladite deuxième borne, chaque élément pouvant par exemple comporter une ou plusieurs cellule(s) électrochimique(s) et/ou une ou plusieurs capacité(s) et/ou une ou plusieurs super capacité(s) et/ou une ou plusieurs cellule(s) de stockage, chaque élément comportant :

   a) des moyens de commutation pour le connecter en série et/ou parallèle, avec au moins un autre élément, ou pour le déconnecter d'un ou plusieurs autres éléments,
   b) des moyens conducteurs (15, 17, 121p, 122p) pour conduire un courant, dit courant principal, parallèlement à l'élément, lorsque celui-ci est déconnecté ou n'est pas connecté en série et/ou en parallèle avec un ou plusieurs autres éléments;

   le dispositif comportant en outre :

   c) - des moyens (20) pour établir un court-circuit entre ladite première borne (101) et ladite deuxième borne (102) de la batterie lorsque celle-ci est déconnectée ou fournit une tension nulle ;
   d) des moyens (30) de contrôle, spécifiquement adaptés pour :

      - sélectionner au moins un premier élément de stockage d'énergie dans un premier état et au moins un deuxième élément de stockage d'énergie dans un deuxième état , l'état d'un élément étant représentatif, ou étant une fonction qui dépend, d'au moins un paramètre parmi la charge, la tension, l'état de santé, la température, l'impédance, la puissance disponible de l'élément, de la charge et/ou de la tension éventuellement corrigée(s) en fonction de la température et/ou de l'état de santé, et pour faire circuler un courant du premier élément vers le deuxième élément lorsque ladite première borne (101) et ladite deuxième borne (102) du dispositif sont court-circuitées ;
      - arrêter le courant lorsque l'état du premier élément a une valeur sensiblement égale à l'état du second élément.

2. Dispositif selon la revendication 1, les moyens (30) de contrôle étant spécialement adaptés :

   - pour calculer, pour chaque élément, un coefficient ($c_{cell\_i}$), dit de priorité, qui définit un ordre de charge ou de décharge des éléments, ce coefficient pouvant être normalisé ;
   - et/ou pour corriger au moins un tel coefficient de priorité afin de faire varier la priorité de l'élément correspondant.

3. Dispositif selon la revendication 2, les moyens (30) de contrôle étant spécifiquement adaptés pour :

   - sélectionner au moins un première élément et au moins un deuxième élément tels que le coefficient du premier élément est supérieur au coefficient du deuxième élément;
   - faire circuler un courant au moins dudit premier élément vers au moins ledit deuxième élément lorsque la première borne (101) et la deuxième borne (102) du dispositif sont court-circuitées.

4. Dispositif selon l'une des revendications 1 à 3, les moyens (30) de contrôle étant spécifiquement adaptés :

- pour réguler le courant qui circule au moins du premier élément vers au moins le deuxième élément lorsque l'entrée et la sortie du dispositif sont court-circuitées, par exemple en fonction de l'écart entre le coefficient et/ou l'état du premier élément et du deuxième élément ou en fonction de l'écart entre au moins le coefficient et/ou l'état du premier élément ou du deuxième élément et une moyenne de ce même coefficient/état calculé pour plusieurs éléments ;
- et/ou pour faire circuler, d'au moins un premier élément vers au moins un deuxième élément, d'abord un courant constant, puis un courant à tension constante.

5. Dispositif selon l'une des revendications 2 à 4, les moyens (30) étant spécifiquement adaptés pour comparer le coefficient ($c_{cell\_i}$) d'un ou plusieurs éléments et/ou la somme des coefficients ($c_{cell\_i}$) de plusieurs éléments, à la moyenne ($c_{moyen}$) du même coefficient d'au moins une partie des éléments.

6. Dispositif selon la revendication 5, les moyens (30) de contrôle étant spécifiquement adaptés pour:

   - sélectionner n (n≥1) premier(s) élément(s) de stockage d'énergie dans un premier état de charge parmi les éléments dont le coefficient ($c_{cell\_i}$) est supérieur à la moyenne ($c_{moyen}$) du même coefficient de l'ensemble des éléments;
   - sélectionner n (n≥1) deuxième(s) élément(s) de stockage d'énergie dans un deuxième état de charge parmi les éléments dont le coefficient ($c_{cell\_i}$) est inférieur à la moyenne ($c_{moyen}$) des coefficients de l'ensemble des éléments;
   - faire circuler un courant dudit ou desdits n premier(s) élément(s) (s) vers ledit ou lesdits n deuxième(s) élément(s) lorsque la première borne (101) et la deuxième borne (102) du dispositif sont court-circuitées ;
   - arrêter la circulation du courant lorsque le coefficient du ou des n (n≥1) premier(s) élément(s) de stockage d'énergie est égal au, ou proche du, coefficient du ou des n (n≥1) deuxième(s) élément(s) de stockage d'énergie ;

   et les moyens (30) étant éventuellement en outre spécifiquement adaptés pour :

   - faire une première somme des tensions d'au moins une partie des premièrs éléments dont le coefficient ($c_{cell\_i}$) est supérieur à la moyenne ($c_{moyne}$) des coefficients de l'ensemble des éléments ;
   - faire une deuxième somme des tensions d'au moins une partie des deuxièmes éléments dont le coefficient ($c_{cell\_i}$) est inférieur à la moyenne ($c_{moyene}$) des coefficients de l'ensemble des éléments;
   - faire circuler un courant entre ladite au moins une partie des premiers éléments et ladite au moins une partie des deuxièmes éléments.

7. Dispositif selon l'une des revendications 1 à 6, comportant en outre des moyens (13, 15,17) pour inverser, ou non, la polarité d'un ou plusieurs éléments.

8. Procédé d'équilibrage d'un dispositif de type pack de batterie comportant une pluralité d'éléments (12, 14, 16) de stockage d'énergie en série, chaque élément comportant par exemple une ou plusieurs cellule(s) électrochimique(s) et/ou une ou plusieurs capacité(s) et/ou une ou plusieurs super-capacité(s) et/ou une ou plusieurs cellule(s) de stockage, chacun étant associé avec des moyens de commutation pour le connecter en série et/ou le placer en parallèle d'un autre, ou le déconnecter et éventuellement le remplacer par un court-circuiter, ce procédé comportant :

   a) l'établissement d'un court-circuit entre une première borne (101) et une deuxième borne (102) du pack de batterie lorsque celui-ci est déconnecté ou fournit une tension nulle ;
   b) la sélection d'au moins un premier élément de stockage d'énergie dans un premier état et d'au moins un deuxième élément de stockage d'énergie dans un deuxième état, l'état d'un élément étant une fonction qui dépend d'au moins un paramètre parmi la charge, la tension, l'état de santé, la température, l'impédance, la puissance disponible de l'élément, la charge et/ou de la tension éventuellement corrigée(s) en fonction de la température et/ou de l'état de santé ;
   c) la circulation d'un courant du premier élément vers le deuxième élément;
   d) l'arrêt du courant lorsque l'état du premier élément a une valeur sensiblement égale à celui du deuxième élément.

9. Procédé selon la revendication 8, dans lequel on calcule, pour chaque élément :

   - un coefficient ($c_{cell\_i}$), dit de priorité, qui définit un ordre de charge ou de décharge des éléments et qui dépend de sa tension et/ou de son état de charge et/ou de son état de santé et/ou de sa température et/ou de son impédance et/ou la puissance et éventuellement pour calculer une fonction ou une pondération, par exemple la moyenne, de ce ou de ces coefficient(s) d'au moins une partie des éléments;
- et/ou on corrige éventuellement au moins un tel coefficient de priorité afin de faire varier la priorité de l'élément correspondant.

**10.** Procédé selon la revendication 9, dans lequel:

- on sélectionne au moins un premier élément et au moins un deuxième élément tels que le coefficient du premier élément est supérieur au coefficient du deuxième élément ;
- on fait circuler un courant au moins dudit premier élément vers au moins ledit deuxième élément après mise en court-circuit de la première borne (101) et de la deuxième borne (102) du pack de batterie.

**11.** Procédé selon l'une des revendications 8 à 10, dans lequel :

- le courant, qui circule au moins du premier élément vers au moins le deuxième élément après mise en court-circuit de la première borne (101) et de la deuxième borne (102) du pack de batterie, est régulé ;
- et/ou une inversion de la polarité d'un ou plusieurs éléments est réalisée ;
- et/ou on fait circuler, d'au moins un premier élément vers au moins un deuxième élément, d'abord un courant constant, puis un courant à tension constante.

**12.** Procédé selon la revendication 11, dans lequel le courant, qui circule au moins du premier élément vers au moins le deuxième élément après mise en court-circuit de la première borne (101) et de la deuxième borne (102) du pack de batterie, est régulé en fonction de l'écart entre le coefficient du premier élément et du deuxième élément ou en fonction de l'écart entre au moins le coefficient du premier élément ou du deuxième élément et une moyenne de ce même coefficient calculé pour plusieurs éléments.

**13.** Procédé selon l'une des revendications 8 à 12, dans lequel on compare le coefficient ($c_{cell\_i}$) d'un ou plusieurs éléments et/ou la somme des coefficients ($c_{cell\_i}$) de plusieurs éléments, à la moyenne ($c_{moyen}$) du même coefficient d'au moins une partie des éléments.

**14.** Procédé selon la revendication 13, dans lequel:

- on sélectionne n (n≥1) premier(s) élément(s) de stockage d'énergie dans un premier état de charge parmi les éléments dont le coefficient ($c_{cell\_i}$) est supérieur à la moyenne ($c_{moyen}$) du même coefficient de l'ensemble des éléments;
- on sélectionne n (n≥1) deuxième(s) élément(s) de stockage d'énergie dans un deuxième état de charge parmi les éléments dont le coefficient ($c_{cell\_i}$) est inférieur à la moyenne ($c_{moyen}$) des coefficients de l'ensemble des éléments ;
- on fait circuler un courant dudit ou desdits n premier(s) élément(s) vers ledit ou lesdits n deuxième(s) élément(s) après mise en court-circuit de la première borne (101) et de la deuxième borne (102) du pack de batteries;
- on arrête la circulation du courant lorsque le coefficient du ou des n (n≥1) premier(s) élement(s) de stockage d'énergie est égal au, ou proche du, coefficient du ou des n (n≥1) deuxième(s) élément(s) de stockage d'énergie.

**15.** Procédé selon la revendication 14, dans lequel:

- on fait une première somme des tensions d'au moins une partie des premiers éléments dont le coefficient ($c_{cell\_i}$) est supérieur à la moyenne ($c_{moyne}$) des coefficients de l'ensemble des éléments ;
- on fait une deuxième somme des tensions d'au moins une partie des deuxièmes éléments dont le coefficient ($c_{cell\_i}$) est inférieur à la moyenne ($c_{moyne}$) des coefficients de l'ensemble des éléments;
- on fait circuler un courant entre ladite au moins une partie des premiers éléments et ladite au moins une partie des deuxièmes éléments.

**Fig. 1**

165

V+ 102

16

17

160

30

Commande

14

15

145

20

125

140

13i₂

13'i₂

12

13

122i

122p

122

V- 101

121i

121

13'i₁

121p 13i₁

120

**Fig. 2**

302

30

300

303

301

S_in

Calcul $c_{cell\ i}$ et $\Delta c_{cell\ i}$ pour chaque brique

Toutes les briques ont $\Delta c_{cell\_i} = 0$

OUI → FIN

NON

Calcul somme des tensions des briques
avec $\Delta c_{cell\ i} > 0$
avec $\Delta c_{cell\_i} > 0$

Arrêt régulation en courant et ouverture int

Connexion en série du groupe de briques avec somme de tension plus faible

Fermeture int

Régulation en courant (connexion briques du deuxième groupe)

OUI ← Une brique de g1 ou g2 a $\Delta c_{cell\_i} = 0$ → NON

**Fig. 3**

Fig. 4

Fig. 5

f(SoC)

Fig. 6

g(T°)

Fig. 7

h(Iout$^2$mΩ)

Fig. 8

Europäisches
Patentamt

European
Patent Office

Office européen
des brevets

# RAPPORT DE RECHERCHE EUROPEENNE

Numéro de la demande

**EP 22 21 5258**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2008/180061 A1 (KOSKI ROY DONALD [US] ET AL) 31 juillet 2008 (2008-07-31) * figures 2-3 * ----- | 1-15 | INV. H02J7/00 H02J7/36 |
| A | WO 2019/129991 A1 (COMMISSARIAT ENERGIE ATOMIQUE [FR]) 4 juillet 2019 (2019-07-04) * figure 3 * ----- | 1-15 | |
| A | CA 3 110 428 A1 (COMMISSARIAT ENERGIE ATOMIQUE [FR]) 12 mars 2020 (2020-03-12) * figure 3b * ----- | 1-15 | |
| | | | DOMAINES TECHNIQUES RECHERCHES (IPC) H02J |

Le présent rapport a été établi pour toutes les revendications

| Lieu de la recherche | Date d'achèvement de la recherche | Examinateur |
|---|---|---|
| Munich | 26 avril 2023 | Bourdon, Jérémy |

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 22 21 5258

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

26-04-2023

| Document brevet cité au rapport de recherche | Date de publication | Membre(s) de la famille de brevet(s) | Date de publication |
|---|---|---|---|
| US 2008180061 A1 | 31-07-2008 | CN 101232193 A | 30-07-2008 |
| | | DE 102008005208 A1 | 31-07-2008 |
| | | JP 5049805 B2 | 17-10-2012 |
| | | JP 2008186804 A | 14-08-2008 |
| | | US 2008180061 A1 | 31-07-2008 |
| WO 2019129991 A1 | 04-07-2019 | CA 3086874 A1 | 04-07-2019 |
| | | EP 3732763 A1 | 04-11-2020 |
| | | FR 3076108 A1 | 28-06-2019 |
| | | US 2020343742 A1 | 29-10-2020 |
| | | WO 2019129991 A1 | 04-07-2019 |
| CA 3110428 A1 | 12-03-2020 | CA 3110428 A1 | 12-03-2020 |
| | | EP 3847734 A1 | 14-07-2021 |
| | | ES 2928622 T3 | 21-11-2022 |
| | | FR 3085558 A1 | 06-03-2020 |
| | | US 2021351606 A1 | 11-11-2021 |
| | | WO 2020049237 A1 | 12-03-2020 |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2972308
- FR 2972305
- FR 2972307
- FR 2977986
- FR 2951320
- FR 2944161

**Littérature non-brevet citée dans la description**

- **M.A. HANNAN ; M.S.H. LIPU ; A. HUSSAIN ; A. MOHAMED.** A review of lithium-ion battery state of charge estimation and management system in electric vehicle applications : Challenges and recommendations. *Renewable and Sustainable Energy Reviews,* 2017, vol. 78, ISSN 1364-0321, 834-854, https://doi.org/10.1016/j.rser.2017.05.001